## Europäisches Patentamt

## European Patent Office

## Office européen des brevets

(11) Publication number: **0 181 875**
**B1**

(12) **EUROPEAN PATENT SPECIFICATION**

(45) Date of publication of patent specification: **21.03.90**

(51) Int. Cl.⁵: **B 23 D 1/14,** B 23 D 7/06

(21) Application number: **85901932.5**

(22) Date of filing: **26.04.85**

(86) International application number:
**PCT/AU85/00092**

(87) International publication number:
**WO 85/04827 07.11.85 Gazette 85/24**

(54) SLOTTING MACHINE.

(30) Priority: **26.04.84 AU 4718/84**

(43) Date of publication of application:
**28.05.86 Bulletin 86/22**

(45) Publication of the grant of the patent:
**21.03.90 Bulletin 90/12**

(84) Designated Contracting States:
**AT BE CH DE FR GB IT LI NL SE**

(56) References cited:
**AU-A- 250 159**
**AU-B-5 539 859**
**AU-B-5 789 573**
**CA-A-1 038 281**
**DE-A-1 602 526**
**DE-A-2 061 230**
**DE-C- 823 694**
**FR-A-2 278 461**
**US-A-3 121 361**
**US-A-3 903 769**
**US-A-4 089 090**

(73) Proprietor: **GLAMAGARD PTY. LIMITED**
**490 Hunter Street**
**Newcastle, NSW 2300 (AU)**

(72) Inventor: **WISE, Frederick, Edward**
**3 Bogan Avenue**
**Sylvania Waters, 2224 NSW (AU)**
Inventor: **WINKLER, Ulrich**
**Lot 4 Wolstonehome Road**
**Bringelly, 2171 NSW (AU)**

(74) Representative: **MacGregor, Gordon et al**
**ERIC POTTER & CLARKSON 14 Oxford Street**
**Nottingham, NG1 5BP (GB)**

Courier Press, Leamington Spa, England.

## Description

### Field of invention

This invention relates according to the precharacterising part of claim 1 to the slotting of a work-piece such as an aluminium extrusion which may then be stretched to form an expanded panel.

A single head slotter is known in which a multi-rib and web work-piece of repeating "H" section is secured to the work table of the slotter and a router is then sequentially positioned between adjacent ribs to form the desired slot therebetween.

Although such a machine has the advantage of being easily adapted to cut a variety of arrays of slots, it is not particularly suitable for the machining of a large number of work-pieces all having the same array of slots.

In the production of expanded panels of a height of say 1.2 metres, it is appropriate to commence with an extrusion of 3.6 metres long which can be cut into three panels either before or after stretching. Thus, the extrusion work-piece will need to be slotted with three repeating arrays of slots. For each panel, there may be a short slot at each end between first and second ribs and a long slot between the second and third ribs and so on across the panel, with the short and long slots overlapping one another.

A machine for forming slots in an elongated workpiece is disclosed in Patent Number US—A—3903769 describing the closest prior art. This machine comprises a work table and feed rollers for driving a workpiece in a feed direction lengthwise of the workpiece, over the work table, and includes a multi-head cutter adapted to engage the workpiece as it is driven by the feed rollers and to form therein a plurality of slots of predetermined length and disposition.

It is an object of this invention to provide a multi-head machine for cutting such repeating arrays of slots in a work-piece as the work-piece travels through the machine.

### Disclosure of the invention

According to the invention there is provided a machine for forming slots in an elongated work-piece comprising:—

(i) a work table,

(ii) feed rollers for driving a work-piece in a feed direction lengthwise of the work-piece, over the work table, and

(iii) a multi-head cutter adapted to engage the work-piece as it is driven by the feed rollers and to form therein a plurality of slots of predetermined length and disposition, wherein the machine further comprises a cutter carriage pivotally mounted on a transverse bar beneath the work table, the cutter carriage mounting the multi-head cutter for rotation about an axis parallel to but spaced from the transverse bar and means for pivotting the carriage about the transverse bar whereby the cutter may be moved into and out of cutting engagement with the workpiece, the cutter carriage also being slidably mounted on the transverse bar whereby the transverse position of the cutter with respect to the workpiece may be changed between slotting operations of the cutter.

### Brief description of the drawings

In order that the invention may be more readily understood and put into practical effect, reference will now be made to the accompanying drawings in which:

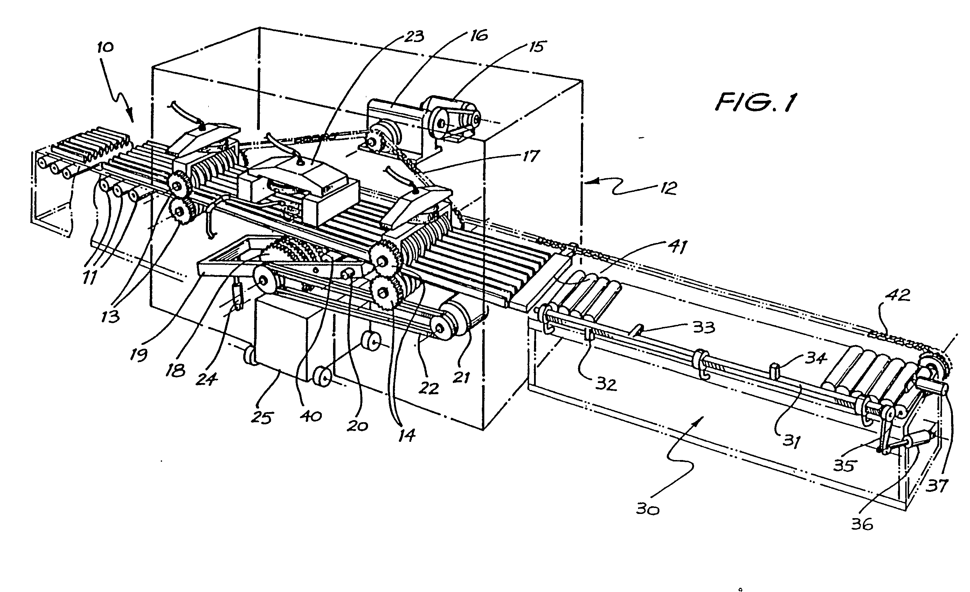

Figure 1 is a perspective view of a slot forming machine according to one embodiment of the invention, and

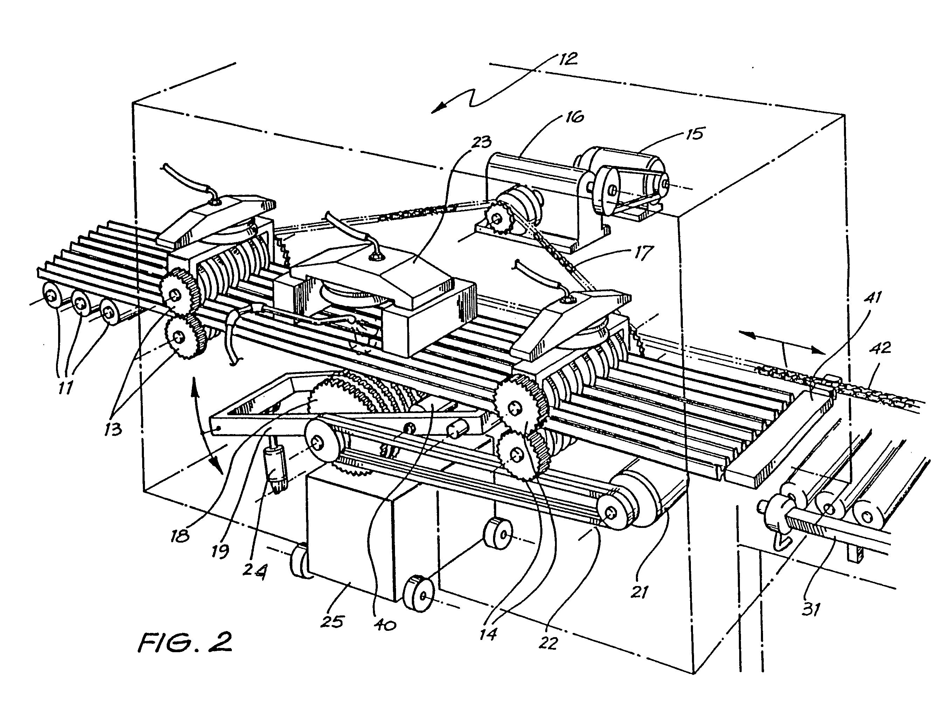

Figure 2 is an enlarged perspective view of the cutting station of the machine shown in Figure 1.

### Best mode of carrying out the invention

The multi-head slotter shown in the drawings has a loading table 10 upon which the work-piece to be machined is placed. The loading table 10 has a plurality of conveyor rollers 11 to assist the manual feeding of the work-piece into the cutting station 12. First and second sets of feed rollers 13 and 14 are driven by a feed drive motor 15 through a gear box 16 by chain drive 17.

The multi-head cutter 18 is mounted on a cutter carriage 19 that is pivotally and slidably mounted on a transverse bar 20 carried by the framework of the machine. In this instance, the cutter head 18 has nine carbide tipped blades profiled to give a radius effect at the ends of each slot. Beneath the carriage 19 there is a drive motor 21 which is coupled to the multi-head cutter 18 by belt drive 22. As is indicated in the drawings, the cutter head 18 is mounted beneath the work table of the machine which has appropriately positioned and dimensioned apertures to enable the cutter blades to engage the work-piece. A cover 23 is located above the cutting station.

The cutter head 18 is moved towards and away from the cutting station by a piston/cylinder arrangement 24 acting upon the free end of the cutter carriage 19. A swarf bin 25 is located beneath the cutting station.

To the right of the cutting station 12 there is an exit table 30 which has conveyor rollers to assist movement of the work-piece. The exit table carries an indexing bar 31 which has mounted thereon adjustable stop blocks 32, 33 and 34. The indexing bar 31 is rotated by an indexing head 35 coupled to an indexing cylinder 36 whereby a selected stop block 32, 33 or 34 may be positioned in the path of the emerging work-piece. A feed cylinder 37 is actuated by the work-piece when it reaches the end of its travel to stop the feed drive motor 16.

The leading end of the work-piece engages reversing block 41 which is moved in forward and reverse directions by the chain 42 that is coupled to the chain drive 17.

When the leading edge of the work-piece approaches the first set of feed rollers 13, the automatic sequence of the machine is brought into operation. The power driven feed rollers 13, 14 locate the work-piece and hold it in the correct position for slotting. This is achieved by using feed rollers with a profile that suits the particular shape of the work-piece.

The cutter 18 is raised from below the work table to engage the work-piece and, in this instance, simultaneously cuts nine slots in the work-piece as it is driven forward by the feed rollers 13, 14. For example, these slots may commence at the end of the work-piece and may be positioned between the first and second and the third and fourth ribs of the work-piece and so on across its transverse dimension. In the context of an expanded fence panel, these first cut slots would be short slots.

When the work-piece strikes the first pre-set stop block 32, the cutting head is retracted from the work table and the cutter carriage is indexed sideways on the bar 20 by the cylinder 40 so that the cutters will be positioned between the second and third and fourth and fifth ribs and so on across the transverse extent of the work-piece. At the same time, if the slots are to be overlapped the automatic operation of the feed rollers is adapted to reverse so that the work-piece is moved slightly back towards the entry guide.

The cutter head 18 is then raised from below the work table to engage the work-piece which is driven forward by the feed rollers 13 and 14 a sufficient amount to provide slots of required length.

When the work-piece strikes the second pre-set stop block 33, the cutter head 18 will again retract and the carriage will index back to its original position so that a third array of the short slots may be cut in line with the first array of short slots.

The diameter of the cutter blades on the cutter head 18 may be of the same dimension as the length of the short slots and in this case the work-piece will not be moved whilst the short slots are being cut. In the case of long slots, the work-piece will be moved forward by a sufficient amount to allow the cutters to cut the desired length of slot.

Chamfer rollers may be provided to engage the cut slots to iron down the burrs ready for removal by a deburring machine.

A cutter lubricant is pumped to the cutting station and is returned with swarf to the swarf box 25 where it is separated and returned to the lubrication sump.

The entry feed rollers 13 and the exit feed rollers 14 are powered by the electric motor 15 (which is separate from the main drive) through a clutch to achieve the required intermittent forward and reverse feed motion. It will be appreciated, that by appropriate forward and reverse movement of the work-piece during non-cutting operations and by either moving the work-piece or holding it stationary during cutting operations any predetermined array of slots may be cut in the work-piece. Although in this instance the cutter blades are spaced to engage between, say, the first and second and third and fourth ribs, they may be spaced together so as to engage between adjacent ribs should this be required for a particular array of slots.

Various modifications may be made in details of design and construction of the machine without departing from the scope of the claims.

## Claims

1. A machine for forming slots in an elongated workpiece comprising:—

(i) a work table,

(ii) feed rollers (13, 14) for driving a work-piece in a feed direction lengthwise of the work-piece over the work table, and

(iii) a multi-head cutter (18) adapted to engage the work-piece as it is driven by the feed rollers (13, 14) and to form therein a plurality of slots of predetermined length and disposition,

characterised in that the machine further comprises a cutter carriage (19) pivotally mounted on a transverse bar (20) beneath the work table, the cutter carriage (19) mounting the multi-head cutter (18) of rotation about an axis parallel to but spaced from the transverse bar (20) and means (24) for pivoting the carriage (19) about the transverse bar (20) whereby the cutter (18) may be moved into and out of cutting engagement with the workpiece, the cutter carriage (19) also being slidably mounted on the transverse bar (20) whereby the transverse position of the cutter (18) with respect to the workpiece may be changed between slotting operations of the cutter (18).

2. A slot forming machine according to claim 1 characterised in that the machine includes an exit table (30) downstream of the cutter (18) having an indexing means (31) adapted to control the position and movement of the cutter (18).

3. A slot forming machine according to claim 1 or claim 2 characterised in that the machine includes feed rollers (13, 14) on both the downstream and upstream side of the work-table.

4. A machine according to any one of the preceding claims characterised in that the feed rollers (13, 14) are adapted to reverse after a first cutting operation of the cutters (18) so that the work-piece is moved in a reverse lengthwise direction sufficiently to overlap slots cut in a second cutting operation, after the transverse position of the cutter (18) has been changed, with those of the first cutting operation.

## Patentansprüche

1. Maschine zum Formen von Schlitzen in einem langgestreckten Werkstück, umfassend

i) einen Arbeitstisch,

ii) Vorschubrollen (13, 14) zum Antreiben des Werkstücks in einer Vorschubrichtung in Längsrichtung des Werkstücks über den Arbeitstisch und

iii) einen Mehrkopffräser (18), der am Werkstück, wenn dieses durch die Vorschubrollen (13, 14) angetrieben wird, anzugreifen und in diesem eine Anzahl von Schlitzen (bzw. Nuten) einer vorbestimmten Länge und Anordnung zu formen vermag,

dadurch gekennzeichnet, daß die Maschine ferner einen schwenkbar auf einer Querstange (20) unter dem Arbeitstisch gelagerten Fräserschlitten oder -wagen (19), welcher den Mehrkopffräser (18) für Drehung im eine Achse, die parallel zur Querstange (20) verläuft, jedoch von ihr beabstandet ist, lagert, und eine Einrichtung (24) zum Verschwenken des Schlittens bzw. Wagens (19) um die Querstange (20) umfaßt, so daß der Fräser (18) in und außer Schneideingriff mit dem Werkstück bewegbar ist, wobei der Fräserschlitten bzw. -wagen (19) auf der Querstange (20) auch verschiebbar geführt ist, so daß die Querposition des Fräsers (18) in bezug auf das Werkstück zwischen Schlitzform- bzw. Stoßvorgängen des Fräsers (18) änderbar ist.

2. Stoßmaschine nach Anspruch 1, gekennzeichnet durch einen dem Fräser (18) nachgeschalteten Austragtisch (30) mit Schalteinrichtung (31) zur Steuerung von Stellung und Bewegung des Fräsers (18).

3. Stoßmaschine nach Anspruch 1 oder 2, gekennzeichnet durch Vorschubrollen (13, 14) sowohl an Stromabals auch an Stromaufseite des Arbeitstisches.

4. Stoßmaschine nach einem der vorangehenden Ansprüche, dadurch gekennzeichnet, daß die Vorschubrollen (13, 14) nach einem ersten Schneidvorgang des Fräsers (18) reversierbar bzw. umsteuerbar sind, so daß das Werkstück ausreichend weit in Gegenlängsrichtung verschiebbar ist, um in einem zweiten Schneidvorgang, nachdem die Querposition des Fräsers (18) geändert worden ist, eingestochene Schlitze mit den Schlitzen vom ersten Schneidvorgang in Überlappung zu bringen.

## Revendications

1. Machine destinée à former des mortaises dans une pièce à usiner allongée comprenant:

(i) un plan de travail

(ii) un rouleau d'amenée (13, 14) pour entraîner une pièce à usiner dans une direction d'amenée longitudinalement par rapport à la pièce sur le plan de travail, et

(iii) un outil de coupe multi-têtes (18) apte à s'engager dans la pièce à usiner lorsqu'elle est entraînée par les rouleaux d'amenée (13, 14) et à y former plusieurs mortaises de longueur et disposition prédéterminées,

caractérisée en ce qu'elle comprend de plus un chariot porte-outils de coupe (19) monté de façon pivotante sur une barre transversale (20) au-dessous du plan de travail, le chariot porte-outils de coupe (19) supportant l'outil de coupe multi-têtes (18) en rotation sur un axe parallèle mais espacé par rapport à la barre transversale (20) et des moyens (24) pour faire pivoter le chariot (19) sur la barre transversale (20), ce qui permet à l'outil de coupe (18) d'être amené sur et enlevé de la position de coupe avec la pièce à usiner, le chariot porte-outils de coupe (19) étant également monté de façon coulissante sur la barre transversale (20), ce qui permet de modifier la position transversale de l'outil de coupe (18) par rapport à la pièce à usiner entre les opérations de mortaisage de l'outil de coupe (18).

2. Machine à former des mortaises selon la revendication 1, caractérisée en ce qu'elle comprend un plan de sortie (30) en aval de l'outil de coupe (18) comportant des moyens d'indexation (31) aptes à commander la position et le mouvement de l'outil de coupe (18).

3. Machine à former des mortaises selon la revendication 1 ou 2, caractérisée en ce qu'elle comprend des rouleaux d'amenée (13, 14) à la fois sur le côté aval et amont du plan de travail.

4. Machine selon l'une quelconque des revendications précédentes, caractérisée en ce que les rouleaux d'amenée (13, 14) sont aptes à changer de direction après une première opération de découpe des outils de coupe (18) de sorte que la pièce à usiner est déplacée dans une direction longitudinale inverse suffisante pour faire se recouvrir les mortaises découpées lors d'une seconde opération de découpe après avoir modifié la position transversale de l'outil de coupe (18), avec les mortaises de la première opération de découpe.

FIG.1

EP 0 181 875 B1

FIG. 2

EP 0 181 875 B1